# EUROPEAN PATENT SPECIFICATION

(11) **EP 4 310 989 B1**
(45) Date of publication and mention of the grant of the patent: **18.02.2026**
(21) Application number: 21931472.1
(22) Date of filing: 16.03.2021
(51) Int. Cl.: H01M 10/613, H01M 10/647, H01M 10/653, H01M 50/20, H01M 50/103, H01M 50/593, H01M 50/119, H01M 50/224, H01M 50/227, H01M 50/231, H01M 50/502, H01M 50/588, H01M 50/209

(54) **BATTERY MODULE**
BATTERIEMODUL
MODULE DE BATTERIE

(43) Date of publication of application: 24.01.2024
(73) Proprietor: KABUSHIKI KAISHA TOSHIBA, Minato-ku Tokyo 105-0023 (JP)
(72) Inventor: KURODA, Kazuto, Tokyo 105-0023 (JP); SUZUKI, Shin, Tokyo 105-0023 (JP); YAMAMOTO, Hirofumi, Tokyo 105-0023 (JP)
(74) Representative: AWA Sweden AB
(86) International application number: PCT/JP2021/010602
(87) International publication number: WO 2022/195720

(56) References cited:
- WO-A1-2019/187940
- WO-A1-2020/152858
- WO-A1-2021/024776
- JP-A- 2013 125 617
- JP-A- 2014 216 113

## Description

### FIELD

Embodiments of the present invention relate generally to a battery module.

### BACKGROUND

In a battery module, a battery group including a plurality of batteries (unit cells) is accommodated inside a case. In a battery module, from the viewpoint of improving the transfer of heat generated in a battery group to the outside, a metal body is provided in a case so as to radiate heat from the metal body to the outside of the battery module. In such a battery module, an insulating material is provided between the plurality of batteries constituting the battery group and the metal body to electrically insulate the battery group from the metal body.

In the battery module as described above, it is necessary to effectively suppress generation of corona discharge in an air layer present between the battery group and the metal body. It is also necessary for the above-described corona discharge to be suppressed without increasing the labor in manufacturing the battery module. Therefore, it is necessary to effectively suppress corona discharge in the air layer between the battery group and the metal body with a simple structure. WO2020/152858A1 relates to a battery pack. JP2014216113A relates to a cooling structure of a storage module. WO2021/024776A1 relates to a power supply device. WO2019/187940A1 relates to a solid battery and a solid battery module. JP2013125617A relates to high-current power supply device.

### CITATION LIST

### PATENT LITERATURE

PATENT LITERATURE 1: Jpn. Pat. Appln. KOKAI Publication No. 2018-163740
PATENT LITERATURE **2:** Jpn. Pat. Appln. KOKAI Publication No. 2014-216113
PATENT LITERATURE 3: Jpn. Pat. Appln. KOKAI Publication No. 2013-164975

### SUMMARY

### TECHNICAL PROBLEM

A problem to be solved by the present invention is to provide a battery module in which corona discharge in an air layer between a battery group and a metal body is effectively suppressed with a simple structure.

### SOLUTION TO PROBLEM

According to an embodiment, a battery module includes a battery group, an electric path, a case, an insulating layer and a conductive layer. The battery group includes a plurality of batteries, and a current passes through the electric path during each of charging and discharging the plurality of batteries. The battery group is accommodated in the case, and the case includes a metal body having electric conductive properties. The insulating layer is stacked on a surface of the metal body on a side where the battery group is located, and has electric insulating properties. The conductive layer is stacked on a surface of the insulating layer on a side where the battery group is located, and is electrically connected to any of the electric path and a portion having electric conductive properties in the battery group.

### BRIEF DESCRIPTION OF THE DRAWINGS

FIG. 1 is a perspective view schematically showing an example of a single battery used in a battery module according to an embodiment.
FIG. 2 is a perspective view showing a battery module according to a first embodiment.
FIG. 3 is a perspective view showing the battery module according to the first embodiment, with exploded views of each member.
FIG. 4 is a cross-sectional view schematically showing the battery module according to the first embodiment in a cross section orthogonal or substantially orthogonal to the lateral direction.
FIG. 5 is a cross-sectional view schematically showing a battery module according to a first modification in a cross section orthogonal or substantially orthogonal to the lateral direction.
FIG. 6 is a cross-sectional view schematically showing a battery module according to a second modification in a cross section orthogonal or substantially orthogonal to the lateral direction.
FIG. 7 is a cross-sectional view schematically showing a battery module according to a third modification in a cross section orthogonal or substantially orthogonal to the lateral direction.
FIG. 8 is a cross-sectional view schematically showing a battery module according to a fourth modification in a cross section orthogonal or substantially orthogonal to the lateral direction.
FIG. 9 is a schematic view showing a conductive layer of a battery module according to a fifth modification, viewed from one side in a stacking direction of an insulating layer and the conductive layer.
FIG. 10 is a cross-sectional view schematically showing a battery module according to a sixth modification in a cross section orthogonal or substantially orthogonal to the lateral direction.

### DETAILED DESCRIPTION

Hereinafter, embodiments will be described with reference to the drawings.

A battery module according to an embodiment includes a battery group including a plurality of batteries (single cells) and a case in which the battery group is accommodated. The batteries constituting a battery group are a secondary battery such as a lithium ion secondary battery.

### (Battery)

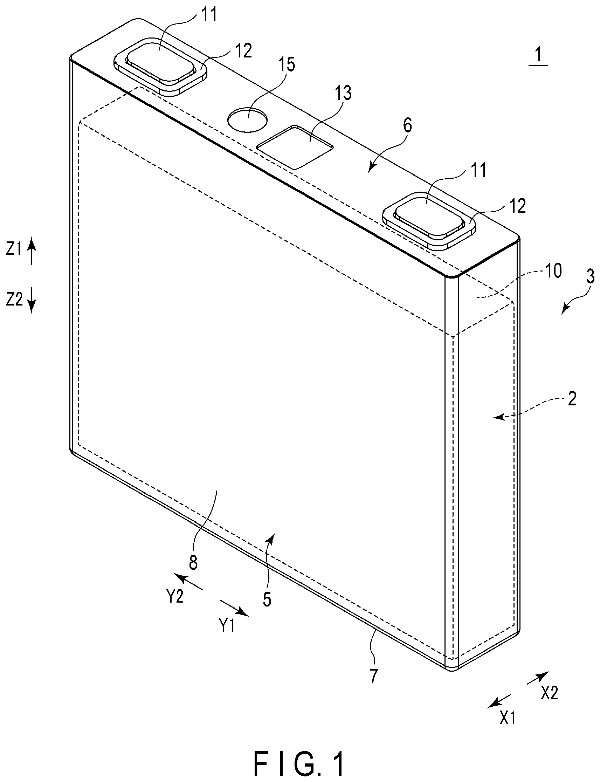

First, a battery (single cell) is described. FIG. 1 shows an example of a single battery **1.** The battery 1 includes an electrode group 2 and an outer container 3 in which the electrode group 2 is accommodated. In the example of FIG. 1, etc., the outer container 3 is made of a metal such as aluminum, an aluminum alloy, iron, or stainless steel. The outer container 3 includes a container body 5 and a lid 6. Herein, in the battery 1 and the outer container 3, a depth direction (the direction indicated by arrows X1 and X2), a transverse direction (the direction indicated by arrows Y1 and Y2) intersecting (orthogonal or substantially orthogonal to) the depth direction, and a height direction (the direction indicated by arrows Z1 and Z2) intersecting (orthogonal or substantially orthogonal to) the depth direction and the transverse direction are defined. In the example of FIG. 1, etc., in each of the battery 1 and the outer container 3, a dimension in the depth direction is smaller than each of the dimension in the lateral direction and the dimension in the height direction.

The container body 5 includes a bottom wall 7 and a peripheral wall 8. The inner cavity 10 in which the electrode group 2 is accommodated is defined by the bottom wall 7 and the peripheral wall 8. In the battery 1, the inner cavity 10 opens toward the side opposite to the side where the bottom wall 7 is located in the height direction. The peripheral wall 8 surrounds the entire circumference of the inner cavity 10 in the circumferential direction. The lid 6 is attached to the container body 5 at the opening of the inner cavity 10. The lid 6 is thus attached to the peripheral wall 8 at its end opposite to the bottom wall 7. The lid 6 and the bottom wall 7 face each other across the inner cavity 10 in the height direction.

The electrode group 2 includes a positive electrode and a negative electrode (both not shown). In the electrode group 2, a separator (not shown) is interposed between the positive electrode and the negative electrode. The separator is made of an electrically insulating material and electrically insulates the positive electrode from the negative electrode.

The positive electrode includes a positive electrode current collector such as a positive electrode current collector foil and a positive electrode active material-containing layer supported on a surface of the positive electrode current collector. Although not limited to the examples disclosed herein, the positive electrode current collector is made of, for example, an aluminum foil or an aluminum alloy foil, which has a thickness of about 5 µm to 20 µm. The positive electrode active material-containing layer includes a positive electrode active material and may optionally include a binder and an electro-conductive agent. Examples of the positive electrode active material include an oxide, a sulfide, or a polymer that can occlude and release lithium ions. The positive electrode current collector includes a positive electrode current collector tab as a portion on which the positive electrode active material-containing layer is not supported.

The negative electrode includes a negative electrode current collector such as a negative electrode current collector foil and a negative electrode active material-containing layer supported on a surface of the negative electrode current collector. The negative electrode current collector is for example, although not limited thereto, an aluminum foil, aluminum alloy foil, or copper foil having a thickness of about 5 µm to 20 µm. The negative electrode active material-containing layer includes a negative electrode active material and may optionally include a binder and an electro-conductive agent. The negative electrode active material is for example, although not limited thereto, a metal oxide, a metal sulfide, a metal nitride, or a carbon material that can occlude and release lithium ions. The negative electrode current collector includes a negative electrode current collector tab as a portion on which the negative electrode active material-containing layer is not supported.

In the electrode group 2, the positive electrode current collector tab and the negative electrode current collector tab constitute a pair of current collector tabs. In the electrode group **2,** a pair of current collecting tabs protrude. In one example, in the electrode group **2,** the positive electrode current collector tab protrudes toward one side of the lateral direction of the battery **1,** and the negative electrode current collector tab protrudes toward the side opposite to the side toward which the positive electrode current collector tab protrudes in the lateral direction of the battery **1.** In another example, in the electrode group **2,** each of the pair of current collector tabs protrudes toward the side where the lid 6 is located in the height direction of the battery 1. In this case, the pair of current collector tabs is located away from each other in the lateral direction of the battery 1.

In the inner cavity 10, an electrolytic solution (not shown) is held in the electrode group 2 (or the electrode group 2 is impregnated with the electrolytic solution). The electrolytic solution may be a nonaqueous electrolyte obtained by dissolving an electrolyte in an organic solvent, or an aqueous electrolyte such as a water solution. Instead of an electrolytic solution, a gel-type electrolyte or a solid electrolyte may be used. In the case where a solid electrolyte is used as an electrolyte, instead of the separator, a solid electrolyte may be interposed between the positive electrode and the negative electrode in the electrode group. In this case, the solid electrolyte electrically insulates the positive electrode from the negative electrode.

In the battery **1,** a pair of electrode terminals 11 is attached to the outer surface (upper surface) of the lid 6 of the outer container 3. The electrode terminals 11 are made of an electro-conductive material such as a metal. One of the electrode terminals 11 is a positive electrode terminal of the battery 1, and the other of the electrode terminals 11 is a negative electrode terminal of the battery 1. An insulating member 12 is provided between each of the electrode terminals 11 and the lid 6. Each of the electrode terminals 11 is electrically insulated by the insulating member 12 from the outer container 3, including the lid 6.

The positive electrode current collector tab of the electrode group 2 is electrically connected to a positive electrode terminal, which is a corresponding one of the electrode terminals 11, via one or more leads (positive electrode-side leads). The negative electrode current collector tab of the electrode group 2 is electrically connected to a negative electrode terminal, which is a corresponding one of the electrode terminals 11, via one or more leads (negative electrode-side leads). Each of the leads is made of a conductive material, such as a metal. In the inner cavity 10 of the outer container 3, the pair of current collecting tabs and the leads are respectively electrically insulated from the outer container 3 (the container body 5 and the lid 6) by one or more insulating members (not shown).

In the example of FIG. 1, the lid 6 is provided with a gas discharge valve 13 and a liquid inlet. A sealing plate 15 for sealing the liquid inlet is welded on the outer surface of the lid 6. The gas discharge valve 13 and the liquid inlet may not be provided to the battery. At the time of charging and discharging the battery 1 in the above-described manner, the outer container 3 may have an electric potential between the electric potentials of the pair of electrode terminals 11 due to conduction through the electrolytic solution or the like. In other words, when the battery 1 is charged, discharged, or the like, the electric potential of the outer container 3 may be between the electric potential of the positive electrode terminal (positive electrode electric potential) and the electric potential of the negative electrode terminal (negative electrode electric potential).

The structure of the battery (unit cell) is not limited to the example shown in FIG. 1. In one example, an exterior portion of the battery may be made of a laminate film. In this case, in the exterior portion of the battery, a metal layer is sandwiched between two insulating layers having electrical insulation properties, and the outer surface of the exterior portion is constituted by one of the two insulating layers. Then, the electrode group is accommodated in the exterior portion constituted by the laminate film.

### (Battery Module)

Hereinafter, the battery module is described. The battery module includes a battery group, and the battery group includes a plurality of batteries (single cells). In one example, each of the plurality of batteries constituting the battery group has the same structure as that of the battery 1 described above.

### (First Embodiment)

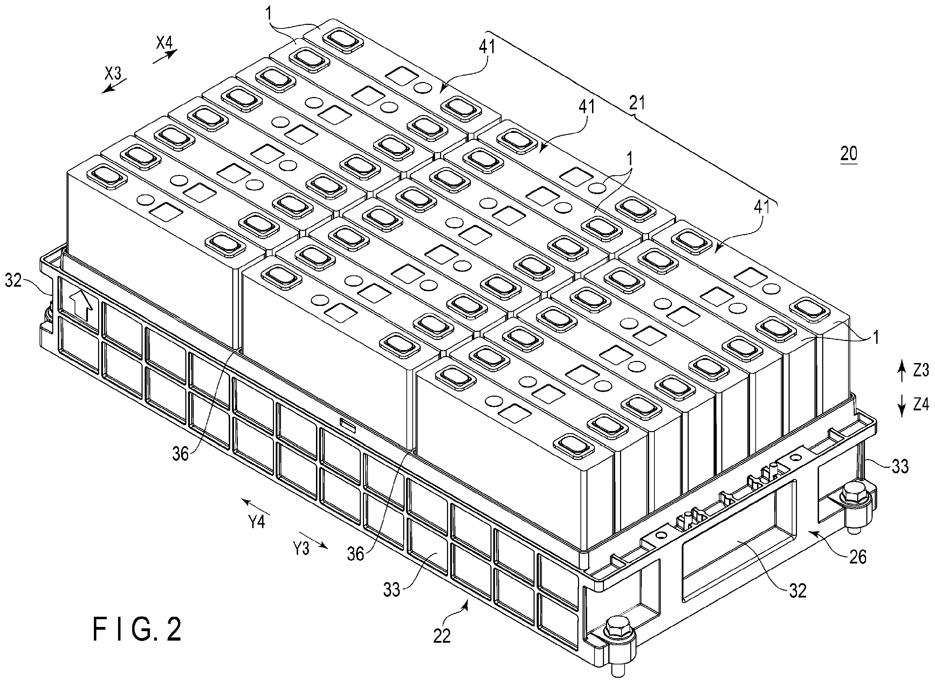

Hereinafter, a first embodiment of a battery module is described. FIGS. 2 to 4 show the battery module 20 of the present embodiment. As shown in FIGS. 2 to 4, etc., the battery module 20 includes a battery group 21 and a case 22 in which the battery group 21 is accommodated. The case 22 defines an accommodating space 23 for the battery group 21. The battery group 21 includes a plurality of the above-described batteries (single cells) 1, and in the battery group 21, the plurality of batteries 1 are electrically connected via a bus bar 25. The bus bar 25 is made of a conductive material. In the battery group 21, at least one of a series connection structure in which the plurality of batteries 1 are electrically connected in series or a parallel connection structure in which the plurality of batteries 1 are electrically connected in parallel is formed.

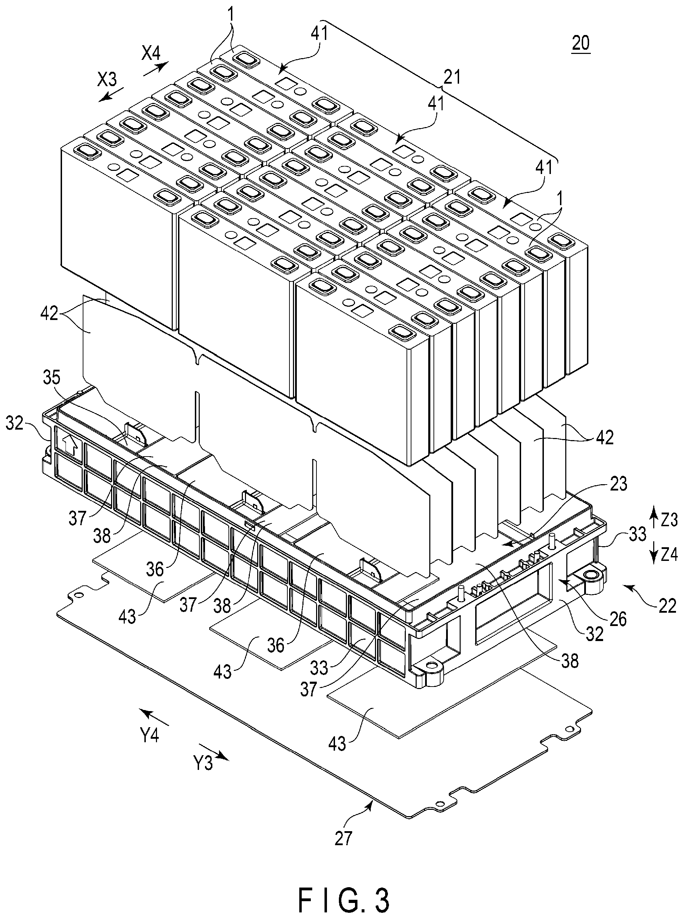

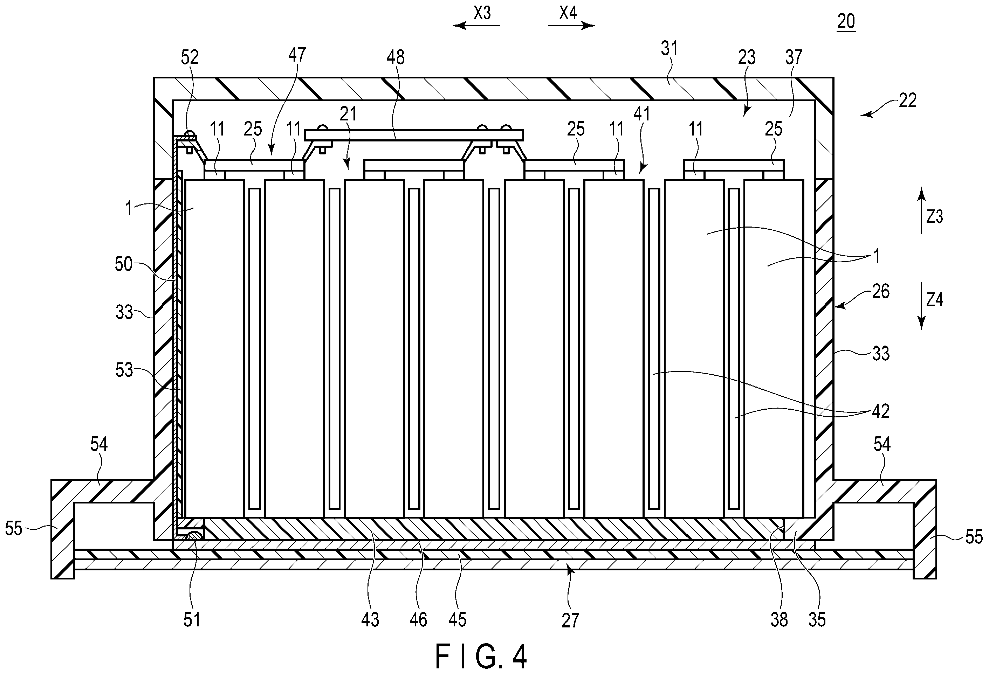

Herein, in the battery module 20 that includes the battery group 21 and the case 22, a depth direction (the direction indicated by arrows X3 and X4), a transverse direction (the direction indicated by arrows Y3 and Y4) intersecting (orthogonal or substantially orthogonal to) the depth direction, and a height direction (the direction indicated by arrows Z3 and Z4) intersecting (orthogonal or substantially orthogonal to) the depth direction and the transverse direction are defined. FIG. 2 is a perspective view, and FIG. 3 is an exploded perspective view showing each member. FIG. 4 shows a cross section orthogonal or substantially orthogonal to the lateral direction.

The case 22 is constituted by a plurality of members, including a frame member 26 and a metal body 27. FIG. 2 shows only the frame member 26 in the case 22, and FIG. 3 shows only the frame member 26 and the metal body 27 in the case 22. The metal body 27 is made of aluminum, an aluminum alloy, or the like, and has conductivity. Portions other than the metal body 27 in the case 22, such as the frame member 26, are made of a material having electrical insulating properties. Examples of the material constituting the portion of the case 22 other than the metal body 27 include resins such as polyphenylene ether, polycarbonate, and polybutylene terephthalate.

The case 22 includes a case top wall (case upper wall) 31 and two pairs of case side walls 32 and 33. The case top wall 31 is adjacent to the accommodating space 23 from one side (arrow Z3 side) in the height direction. In the battery module 20, the two pairs of case side walls 32 and 33 form a case peripheral wall that surrounds the accommodating space 23 over the entire circumference in the circumferential direction. The frame member 26 of the case 22 includes a frame bottom portion 35. In the case 22, the case top wall 31 and the frame bottom portion 35 face each other across the accommodating space 23 in the height direction. Each of the case side walls 32 and 33 extends in the height direction between the case top wall 31 and the frame bottom portion 35. The pair of case side walls 32 face each other across the accommodating space 23 in the lateral direction. The pair of case side walls 33 face each other across the accommodating space 23 in the depth direction. Each of the case side walls 32 extends in the depth direction between the case side walls 33. Each of the case side walls 33 extends between the case side walls 32 along the lateral direction.

The case 22 also includes two partition walls 36. The partition walls 36 are disposed between the case side walls 32 constituting a pair in the lateral direction and are spaced apart from each other in the lateral direction. In addition, each of the partition walls 36 is disposed away from each of the case side walls 32 in the lateral direction. Each of the partition walls 36 extends in the height direction between the case top wall 31 and the frame bottom portion 35. Each of the partition walls 36 extends in the depth direction between the case side walls 33. Since the two partition walls 36 are formed as described above, in the example of FIGS. 2 and 3, etc., the accommodating space 23 of the battery group 21 is partitioned into three areas 37 by the partition walls 36. That is, the accommodating space 23 is divided into three parts in the lateral direction by the partition walls 36.

The frame bottom portion 35 supports the battery group 21 from a side opposite to the case top wall 31 in the height direction. Three through holes 38 are formed in the frame bottom portion 35. In the frame bottom portion 35, each of the through holes 38 is formed at a position corresponding to one of the areas 37. Each of the areas 37 of the accommodating space 23 is open to the outside of the frame member 26 through a corresponding one of the through holes 38. In each of the two areas 37 located at both ends in the lateral direction among the three areas 37, the frame bottom portion 35 protrudes to the inner peripheral side from each of the case side walls 32 and 33 and the partition wall 36, and the edge of the through hole 38 is formed by the protruding end of the frame bottom portion 35. In one of the three areas 37 located at the center in the lateral direction, the frame bottom portion 35 protrudes from each of the case side walls 33 and the partition walls 36 toward the inner peripheral side, and the protruding end of the frame bottom portion 35 forms the edge of the through hole 38. Therefore, in each of the areas 37, the frame bottom portion 35 is formed in a state of protruding to the inner peripheral side over the entire circumference, and in each of the through holes 38, an edge is formed across the entire circumference by the protruding end of the frame bottom portion 35.

In the present embodiment, the battery group 21 forms three battery rows 41. Each of the battery rows 41 is disposed in corresponding one of areas 37 in the accommodating space 23. The battery rows 41 adjacent to each other in the lateral direction of the battery module 20 are partitioned by the partition wall 36. The plurality of batteries 1 are arranged in the battery row 41, and in the example of FIGS. 2 and 3, eight batteries 1 are arranged in each of the battery rows 41. In each of the battery rows 41, the batteries 1 are arranged in such a manner that the arrangement direction of the batteries 1 coincides or substantially coincides with the depth direction of the battery module 20 (case 22). In each of the three areas 37, the battery row 41 is supported by a protruding portion of the frame bottom portion 35 toward the inner peripheral side.

In the battery group 21 (each of the battery rows 41), the depth direction of each battery 1 coincides or substantially coincides with the depth direction of the battery module 20 (case 22), and the lateral direction of each of the batteries 1 coincides or substantially coincides with the lateral direction of the battery module 20. In the battery group 21, the height direction of each battery 1 coincides or substantially coincides with the height direction of the battery module 20. Each battery 1 is disposed in the accommodating space 23 in such a manner that the outer surface of the bottom wall 7 faces the side where the frame bottom portion 35 is located and the outer surface of the lid 6 faces the side where the case top wall 31 is located. In each of the battery rows 41, the plurality of batteries 1 are arranged without or almost without being shifted with respect to each other in the lateral direction and the height direction of the battery module 20. The three battery rows 41 are arranged without or almost without being shifted with respect to each other in the depth direction and the height direction of the battery module 20.

In each of the battery rows 41 of the battery group 21, a partition plate (separator) 42 is provided between the batteries 1 adjacent to each other in the arrangement direction (depth direction of the battery module 20). Each of the battery rows 41 is provided with one or more partition plates 42, and in the example of FIGS. 2 to 4 and the like, each of the battery rows 41 is provided with seven partition plates 42. At least an outer surface of each of the partition plates 42 is made of a material having electrical insulation properties. Examples of the material forming at least the outer surface of the partition plate 42 include electrically insulating resins such as polyphenylene ether (PPE), polycarbonate (PC), and polybutylene terephthalate (PBT).

The metal body 27 forms a part of the case bottom wall of the case 22 and a part of the outer surface of the case 22. The metal body 27 serves as a heat radiator that radiates heat generated in the battery group 21 to the outside of the battery module 20. The metal body 27 has a higher thermal conductivity than portions of the case 22 other than the metal body 27. The metal body 27 is attached to the frame member 26 from the side opposite to the side where the case top wall 31 is located in the height direction of the battery module 20. In the present embodiment, the metal body 27 is located on the side opposite to the side on which the case top wall 31 is located with respect to the battery group 21 (the plurality of batteries 1). The metal body 27 is formed into an appropriate size, shape, etc. as required. In one example, the metal body 27 is formed into a flat plate shape or a substantially flat plate shape having a thickness of about 0.5 mm or more and 5 mm or less.

In the present invention, the battery module 20 includes three insulating sheets (insulators) 43. Each of the insulating sheets 43 has electrical insulating properties and has a higher thermal conductivity than the portions of the case 22 other than the metal body 27 and air. It is preferable that each insulating sheet 43 have plasticity. As a material forming the insulating sheets 43, a resin having an electrical insulating property and plasticity, such as silicone, may be used. However, each of the insulating sheets 43 has a lower thermal conductivity than the metal body 27. Each of the insulating sheets 43 is sandwiched between the battery group 21 and the metal body 27 in regard to the height direction of the battery module 20.

Each of the insulating sheets 43 is disposed in a corresponding one of the areas 37 in the accommodating space 23. Each of the insulating sheets 43 is in close contact with and abuts to a corresponding one of the battery rows 41 in a corresponding one of the areas 37. In each of the battery rows 41, a corresponding one of the insulating sheets 43 comes into close contact with and abuts to the outer container 3 (bottom wall 7) of each of the batteries 1 from the side where the metal body 27 is located in the height direction of the battery module 20. In each of the battery rows 41, a part of the bottom wall 7 of the outer container 3 is in contact with the frame bottom portion 35 or bonded to the frame bottom portion 35 via an adhesive or the like in each of the batteries **1.** Thus, each of the battery rows 41 is supported by the protruding portion of the frame bottom portion 35 toward the inner peripheral side. In each of the batteries 1 in the battery row 41, a corresponding one of the insulating sheets 43 is brought into close contact with and abuts against a portion of the bottom wall 7 of the outer container 3 other than the contact portion and the bonding portion with the frame bottom portion 35.

Further, each of the insulating sheets 43 is inserted into a corresponding one of the through holes 38. In each through hole 38, a slight gap may be formed between the disposed insulating sheet 43 and the protruding end of the frame bottom portion 35 in manufacturing. In this case, a gap formed between the insulating sheet 43 and the protruding end of the frame bottom portion 35 in each of the through holes 38 serves as an air layer between the battery group 21 and the metal body 27.

In the battery module 20, an insulating layer 45 is laminated on the surface of the metal body 27 on the side where the battery group 21 is located. The insulating layer 45 is formed between each of the insulating sheet 43 and the frame bottom portion 35 and the metal body 27 in regard to the height direction of the battery module 20. The insulating layer 45 has electrical insulating properties. The insulating layer 45 is, for example, an epoxy resin film or the like, and is made of a resin having electrical insulating properties. In the battery module 20 of the present embodiment, a conductive layer 46 is laminated on the surface of the insulating layer 45 on the side where the battery group 21 is located. The conductive layer 46 is formed between each of the insulating sheet 43 and the frame bottom portion 35 and the insulating layer 45 in the height direction of the battery module 20. The conductive layer 46 is made of a metal having conductivity, such as copper or a copper alloy. Therefore, in the battery module 20, the metal body 27, the insulating layer 45, and the conductive layer 46 are stacked in this order from the side that is far from the battery group 21.

The insulating layer 45 is in close contact with the metal body 27, and air (an air layer) is either substantially or entirely absent between the insulating layer 45 and the metal body 27. The conductive layer 46 is in close contact with the insulating layer 45, and air (an air layer) is either substantially or entirely absent between the insulating layer 45 and the conductive layer 46. The metal body 27 is electrically insulated from the conductive layer 46 by the insulating layer 45. In FIG. 3, the insulating layer 45 and the conductive layer 46 are omitted. In FIG. 4, for the sake of explanation, the thickness (dimension in the stacking direction) of each of the insulating layer 45 and the conductive layer 46 looks substantially the same as the thickness (dimension in the stacking direction) of the metal body 27; however, in reality, the thickness of each of the insulating layer 45 and the conductive layer 46 is much smaller than the thickness of the metal body 27.

In the present embodiment, the insulating layer 45 and the conductive layer 46 are formed integrally with the metal body 27. In one example, a metal base substrate such as an aluminum base substrate used for forming a printed wiring board is used as a substrate on which the metal body 27, the insulating layer 45, and the conductive layer 46 are integrally formed. In another example, the metal body 27, the insulating layer 45, and the conductive layer 46 are integrally formed by stacking an insulating sheet and a metal sheet in this order on the surface of the metal body and pressing the insulating sheet and the metal sheet against the metal body under pressure in a high temperature environment. In both cases, the metal body 27, the insulating layer 45, and the conductive layer 46 are integrally formed in a state where air is either substantially or entirely absent between the insulating layer 45 and the metal body 27 and between the insulating layer 45 and the conductive layer 46.

The insulating layer 45 extends beyond the layer edge of the conductive layer 46 to an area outside the layer edge of the conductive layer 46 in a direction intersecting (orthogonal or substantially orthogonal to) the stacking direction of the insulating layer 45 and the conductive layer 46. In the example of FIG. 4, etc., the insulating layer 45 extends to the outer edge of the metal body 27. In the present embodiment, the insulating layer 45 extends beyond the layer edge of the conductive layer 46 to an area outside the layer edge of the conductive layer 46 in both the depth direction and the lateral direction of the battery module 20.

In the present embodiment, the frame bottom portion 35 is in contact with the conductive layer 46 from the side where the battery group 21 is located in regard to the height direction. Each of the insulating sheets 43 is in close contact with and abuts to the conductive layer 46 from the side where the battery group 21 is located in the height direction of the battery module 20. In the present embodiment, the battery group 21 is electrically insulated from the metal body 27 by the insulating layer 45, etc. With the above-described structure, in the battery module 20, each of the insulating sheet 43 and the frame bottom portion 35 is interposed between the battery group 21 and the metal body 27 on which the insulating layer 45 and the conductive layer 46 are stacked in regard to the height direction of the battery module 20.

In the battery module 20, heat generated in each of the battery rows 41 is transmitted to the metal body 27 through the corresponding one of the insulating sheets 43, the conductive layer 46, and the insulating layer 45 in this order. Therefore, a heat transfer path that does not pass through an air layer from the battery group 21 to the metal body 27 is formed by the insulating sheet 43, etc. Then, the heat transferred to the metal body 27 is radiated from the metal body 27 to the outside of the battery module 20.

The battery module 20 is used, being installed on a metal base (cooling plate), for example. In this case, the battery module 20 is installed on the base, with the base being adjacent to the metal body 27 from the side opposite to the battery group 21. The heat transmitted from the battery group 21 to the metal body 27 as described above is radiated from the metal body 27 to the base.

The battery module 20 is used as, for example, a stationary power supply or a power supply for a railway vehicle. Herein, in a case where the battery module 20 is used as a power source for railway, a plurality of battery modules including the battery module 20 are electrically connected in series in a battery system in which the battery module 20 is used. Therefore, in the battery system, a large number of batteries are connected in series, and when the battery module 20 is charged and discharged, heat generation in the battery group 21 increases. Therefore, the battery module 20 is required to have a high cooling performance. In such a case, forced cooling may be performed by providing a flow path, through which a cooling fluid including a cooling liquid, a cooling gas, or the like flows, inside a base (cooling plate) on which the battery module 20 is installed.

In the battery module 20, a battery group 21 constituted by a plurality of batteries 1 includes a pair of external terminals (not shown), and an electric path 47 is formed between the pair of external terminals. A current flows through the electrical path 47 during each of charging and discharging of the plurality of batteries 1 constituting the battery group 21. The electric path 47 is constituted by the electrode group 2 of each of the plurality of batteries 1, the electrode terminals 11 of each of the plurality of batteries 1, the bus bar 25, and the like. In addition, when the battery module 20 is used as a power source for a railway, a plurality of battery modules including the battery module 20 are electrically connected in series as described above. In this case, the electrical path 47 of the battery module 20 constitutes part of a main circuit through which a current flows through the plurality of battery modules 20.

The battery module 20 includes a monitoring board 48. A detection circuit and the like are formed on the monitoring board 48, and the detection circuit or the like of the monitoring board 48 is electrically connected to the electric path 47. In the example of FIG. 4, etc., the detection circuit or the like of the monitoring board 48 is electrically connected to the electric path 47 by connecting the monitoring board 48 to one or more of the bus bars 25 via a screw or the like. Note that the connection between each of the one or more bus bars 25 and the monitoring board 48 is not limited to a structure in which the connection is made by a screw, and may be a structure in which the connection is made by soldering, a connector, or the like. The detection circuit of the monitoring board 48 detects any one of the voltage of the entire battery group 21, the voltage of one or more of the plurality of batteries 1, the temperature of one or more of the plurality of batteries 1, or the current flowing through the electric path 47.

Further, the battery module 20 includes a relay conductive portion 50 made of a conductive material. The relay conductive portion 50 is connected to the conductive layer 46 at a connection position 51 and is connected to one of the bus bars 25 at a connection position 52. Therefore, the relay conductive portion 50 connects between the conductive layer 46 and one of the bus bars 25 and relays between the conductive layer 46 and one of the bus bars 25. Thus, the conductive layer 46 is electrically connected to one of the bus bars 25 and is electrically connected to the electrical path 47. In the example of FIG. 4, etc., the relay conductive portion 50 extends from the connection position 51 to the connection position 52 toward the side where the case top wall 31 is located in the height direction. The relay conductive portion 50 extends through an area between one of the case side walls 33 and the battery 1 disposed at one end of one of the battery rows 41.

The relay conductive portion 50 is covered with the insulating portion 53 from the side where the accommodating space 23 is located. The insulating portion 53 has electrical insulating properties and prevents the relay conductive portion 50 from coming into contact with the outer container 3 of the battery 1. In one example, an electric wire is used as the relay conductive portion 50, and a portion covered by the electric wire serves as the insulating portion 53. In another example, a substrate of a flexible printed wiring board is used as the insulating portion 53, and a circuit formed on the substrate in the flexible printed wiring board serves as the relay conductive portion 50. In another example, the conductor serving as the relay conductive portion 50 is formed integrally with the frame member 26, being embedded in the frame member 26. A part of the frame member 26 serves as the insulating portion 53.

In the example of FIG. 4, etc., on the surface of the conductive layer 46 on the side where the battery group 21 is located, a connection position 51 at which the conductive layer 46 is connected to the relay conductive portion 50 is formed. Further, the frame bottom portion 35 is disposed between the connection position 51 and the battery group 21, and the frame bottom portion 35 prevents the conductive layer 46 and the relay conductive portion 50 from coming into contact with the outer container 3 of the battery 1. In the example of FIG. 4, the connection position 51 at which the relay conductive portion 50 is connected to the conductive layer 46 is formed between one of the insulating sheets 43 and one of the case side walls 33. At the connection position 51, the relay conductive portion 50 is connected to the conductive layer 46 by, for example, soldering. In addition, when the metal body 27, the insulating layer 45, and the conductive layer 46 are made of a metal base substrate and the relay conductive portion 50 and the insulating portion 53 are made of a flexible printed wiring board, the relay conductive portion 50 may be connected to the conductive layer 46 by connector connection at the connection position 51.

In the example shown in FIG. 4, etc., the relay conductive portion 50 is connected to one of the bus bars 25 via a screw or the like at the connection position 52. However, the connection of the relay conductive portion 50 to one of the bus bars 25 is not limited to a connection realized by a screw, and may be a connection realized by soldering, a connector, or the like.

In the example shown in FIG. 4, etc., the case 22 includes extension portions 54 and 55. The extension portions 54 extend outward from the case side walls 32 and 33. The extension portion 55 is connected to an end of the extension portion 54 on the side opposite to the case side walls 32 and 33, that is, a protruding end of the extension portion 54 from the case side walls 32 and 33, and extends from the extension portion 54 to the side opposite to the side where the case top wall 31 is located. Therefore, the extension portions 54 and 55 form portions protruding outward from the case side walls 32 and 33.

The insulating layer 45 and the metal body 27 extend to the extension portion 55 beyond the layer edge of the conductive layer 46 in a direction intersecting the stacking direction of the insulating layer 45 and the conductive layer 46 (in the present embodiment, the depth direction and the lateral direction of the battery module 20). In the example of FIG. 4, etc., the layer edge of the insulating layer 45 and the outer edge of the metal body 27 abut on the extension portion 55. In addition, the layer edge of the conductive layer 46 is positioned inside with respect to the outer surfaces of the case side walls 32 and 33. Therefore, by providing the extension portions 54 and 55, the structure in which the insulating layer 45 and the metal body 27 extend to the region outside the layer edge of the conductive layer 46 in the direction intersecting the stacking direction is easily realized.

As described above, in the present embodiment, the insulating layer 45 is laminated on the surface of the metal body 27 on the side where the battery group 21 is located, and the conductive layer 46 is laminated on the surface of the insulating layer 45 on the side where the battery group 21 is located. The conductive layer 46 is electrically connected to one of the bus bars 25 and is electrically connected to an electrical path 47 through which a current flows in each of charging and discharging of the battery group 21. Therefore, the conductive layer 46 has the same electric potential as an electric potential at any location in the electric path 47.

In addition, in each of charging and discharging of the battery group 21, a base on which the battery module 20 is installed has a ground electric potential. Therefore, in a state where the battery module 20 is used, an electric potential difference is generated between the electric path 47 and the base. In addition, in each of charging and discharging of the battery group 21, the outer container 3 of each of the batteries 1 may have an electric potential differing from the ground electric potential due to conduction or the like through the electrolytic solution or the like. Therefore, when the battery module 20 is used, an electric potential difference is generated between the battery group 21 and the ground (base). In particular, when the battery module 20 is used as a power source for railways, a plurality of battery modules including the battery module 20 are electrically connected in series as described above, and a large number of batteries are electrically connected in series. Therefore, depending on the battery module, the electric potential difference between the electric potential of the battery group 21 and the electric potential of the base (ground electric potential) becomes large.

When an electric potential difference is generated between the battery group 21 and the ground (base) as described above, an electric potential difference is also generated between the battery group 21 (electric path 47) and the metal body 27. Herein, in the present embodiment, the conductive layer 46 has the same electric potential as that of any location in the electrical path 47. Therefore, in a state where the battery module 20 is used, an electric potential difference occurs between the electric path 47 and the metal body 27, and thus the conductive layer 46 has an electric potential differing from that of the metal body 27.

In the present embodiment, provision of the metal body 27 in the case 22 allows heat generated in the battery group 21 to be easily radiated from the metal body 27 to the outside of the battery module 20. Therefore, heat radiation in the battery module 20 is improved.

In the present embodiment, since the conductive layer 46 is electrically connected to the electrical path 47, no voltage is applied between the conductive layer 46 and each of the electrical path 47 and the battery group 21. For this reason, a voltage is not applied to the insulating sheet 43, the frame bottom portion 35, and a gap (air layer) between each of the insulating sheet 43 and the frame bottom portion 35. Since no voltage is applied to the gap between each of the insulating sheets 43 and the frame bottom portion 35, an occurrence of corona discharge in the gap between each of the insulating sheets 43 and the frame bottom portion 35 is suppressed.

In the present embodiment, since the conductive layer 46 has an electric potential differing from that of the metal body 27, a voltage is applied to the insulating layer 45 between the conductive layer 46 and the metal body 27. However, there is no air or almost no air between the metal body 27 and the insulating layer 45. There is no air or almost no air between the insulating layer 45 and the conductive layer 46. For this reason, even when a voltage is applied between the metal body 27 and the conductive layer 46, corona discharge is suppressed. Therefore, in the present embodiment, even when the metal body 27 is provided to improve heat radiation from the battery module 20, corona discharge in the air layer between the battery group 21 and the metal body 27 is effectively suppressed.

Furthermore, in the present invention, since the corona discharge is suppressed as described above, it is not necessary to fill the gap between each of the insulating sheets 43 and the frame bottom portion 35 with a material or the like having electrical insulating properties. The metal body 27, the insulating layer 45, and the conductive layer 46 can be easily integrally formed from a metal base substrate or the like. For this reason, corona discharge in the air layer between the battery group 21 and the metal body 27 is suppressed with a simple structure. In other words, corona discharge is suppressed without increasing the time and effort in manufacturing the battery module 20.

In the present embodiment, the insulating layer 45 extends beyond the layer edge of the conductive layer 46 to an area outside the layer edge of the conductive layer 46 in a direction intersecting the stacking direction of the insulating layer 45 and the conductive layer 46. For this reason, an insulation distance (creepage distance) between the conductive layer 46 and the metal body 27 is increased by a dimension by which the insulating layer 45 extends outward with respect to the layer edge of the conductive layer 46. The increase of the insulation distance between the conductive layer 46 and the metal body 27 appropriately ensures electrical insulation between the conductive layer 46 and the metal body 27 even when an electric potential difference is generated between the conductive layer 46 and the metal body 27.

In the present embodiment, the conductive layer 46 is electrically connected to one of the bus bars 25. For this reason, even if the exterior portion of the battery (unit cell) is constituted by a laminate film and the outer surface of the battery (unit cell) has electrical insulation properties in the battery module, the conductive layer 46 can be set to the same electric potential as that of any location in the electrical path 47.

In the present invention, an insulating sheet (insulator) 43 is disposed between each of the battery rows 41 of the battery group 21 and the conductive layer 46. For this reason, the plurality of batteries 1 are effectively prevented from being electrically connected through the conductive layer 46. In the present embodiment, the insulating portion 53 prevents the relay conductive portion 50 from coming into contact with the outer container 3 of the battery 1. For this reason, the plurality of batteries 1 are effectively prevented from being electrically connected through the relay conductive portion 50. Therefore, the plurality of batteries 1 are effectively prevented from being short-circuited via a portion other than the electric path 47.

In addition, in the present embodiment, each of the insulating sheets 43 has a higher thermal conductivity than a portion of the case 22 other than the metal body 27 and air. Heat generated in the battery group 21 is transmitted to the metal body 27 through the insulating sheet 43, the conductive layer 46, and the insulating layer 45. For this reason, heat transfer from the battery group 21 to the metal body 27 is improved, and heat radiation in the battery module 20 is further improved.

### (Modifications)

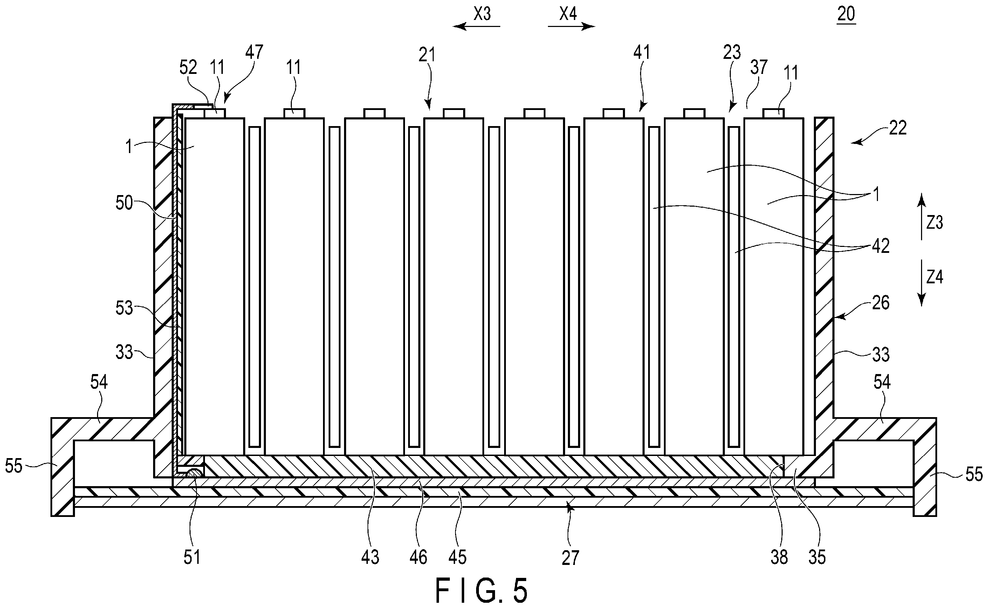

In a first modification shown in FIG. 5, the relay conductive portion 50 is connected to the conductive layer 46 at the connection position 51. However, in the present modification, a relay conductive portion 50 is connected to one electrode terminal 11 of one of the plurality of batteries 1 of the battery group 21 at the connection position 52. For this reason, in the present modification, the conductive layer 46 is electrically connected to one of the pair of electrode terminals of a certain battery 1 via the relay conductive portion 50. The relay conductive portion 50 is connected to one of the electrode terminals 11 by soldering, screws, or the like.

Also in the present modification, the conductive layer 46 is electrically connected to the electrical path 47 through which a current flows in each of charging and discharging of the battery group 21. For this reason, the conductive layer 46 has the same electric potential as that of any location in the electric path 47. Therefore, also in the present modification, corona discharge in the air layer between the battery group 21 and the metal body 27 is effectively suppressed with a simple structure, similar to the foregoing embodiment, etc.

In another modification, the relay conductive portion 50 may be connected to, at the connection position 52, one of the pair of external terminals of the battery group 21, a detection circuit of the monitoring board 48, or the like. Also in this case, the conductive layer 46 is electrically connected to the electrical path 47 and has the same electric potential as that of any location in the electrical path 47. For this reason, corona discharge in the air layer between the battery group 21 and the metal body 27 layer is effectively suppressed with a simple structure, similar to the foregoing embodiment, etc.

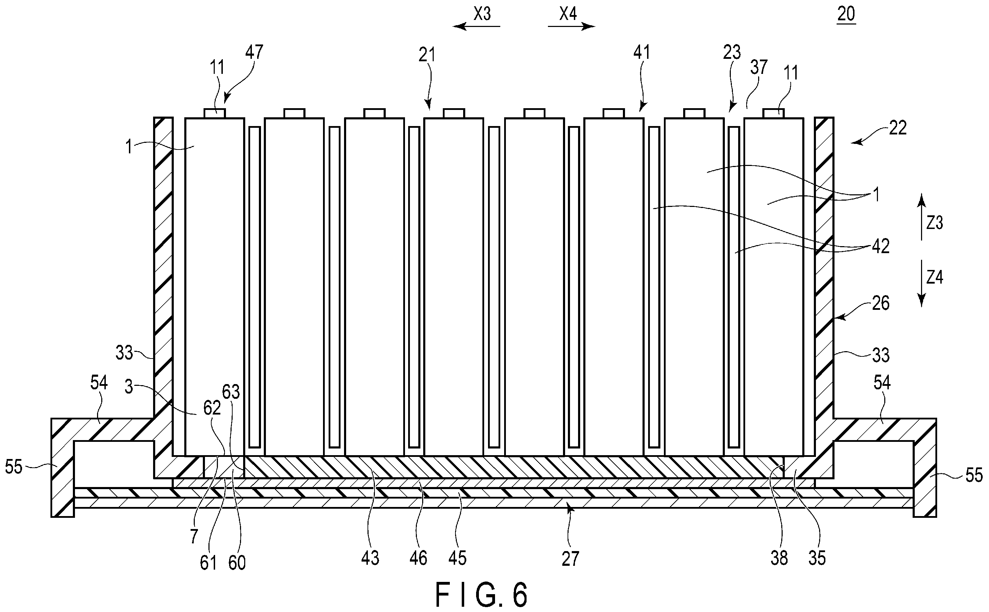

In a second modified example shown in FIG. 6, a relay conductive portion 60 is provided instead of the relay conductive portion 50. The relay conductive portion 60 is connected to the conductive layer 46 at a connection position 61, and is connected to the outer container 3 of one of the plurality of batteries 1 of the battery group 21 at a connection position 62. Therefore, in the present modification, the conductive layer 46 is electrically connected to the outer container 3 of one battery 1, with the relay conductive portion 60 being interposed therebetween. In the present modification, one of the insulating sheets (insulators) 43 is provided with a hole 63 penetrating the insulating sheet 43 along the stacking direction of the insulating layer 45 and the conductive layer 46. The relay conductive portion 60 is arranged in the hole 63.

In the present modification, the relay conductive portion 60 is made of a flexible conductive material, such as a spring such as a leaf spring, a conductive rubber, or a conductive adhesive. Since the relay conductive portion 60 is made of a material having flexibility, a manufacturing tolerance or the like at the time of manufacturing the battery module 20 is absorbed. For this reason, the relay conductive portion 60 is appropriately connected to the conductive layer 46 at the connection position 61, and is appropriately connected to the outer container 3 of a certain battery 1 at the connection position 62.

In addition, when the relay conductive portion 60 is made from a spring and the metal body 27, the insulating layer 45, and the conductive layer 46 are made from a metal base substrate, the relay conductive portion 60 may be connected to the conductive layer 46 by soldering from the viewpoint of improving the manufacturing efficiency of the battery module 20. When the outer container 3 of the battery 1 is made of aluminum or an aluminum alloy and the relay conductive portion 60 is made from a spring, it is preferable that the position where the relay conductive portion 60 is connected to the outer container 3, i.e., the surface of the relay conductive portion 60 in contact with the outer container 3, be subjected to nickel-plating. As a result, oxidation of the surface is effectively prevented at the connection position 62 of the relay conductive portion 60. When the relay conductive portion 60 is made of conductive rubber, and the metal body 27, the insulating layer 45, and the conductive layer 46 are made from a metal base substrate, it is preferable that the surface of the conductive layer 46 be subjected to metal plating such as gold plating. Thus, oxidation of the surface of the conductive layer 46 is effectively prevented.

In this modification, the conductive layer 46 is electrically connected to the outer container 3 of one battery 1, i.e., a conductive portion of the battery group 21. Herein, at the time of charging and discharging, etc. of the plurality of batteries 1, in the battery 1 to which the relay conductive portion 60 is connected, the electric potential of the outer container 3 becomes an electric potential between the electric potentials of the pair of electrode terminals 11 due to conduction through the electrolytic solution or the like. For this reason, the conductive layer 46 has an electric potential between the electric potentials of the pair of electrode terminals 11 of the battery 1 in which the relay conductive portion 60 is connected to the outer container 3, and has the same electric potential as that of any location of the electric path 47. Therefore, also in the present modification, corona discharge in the air layer between the battery group 21 and the metal body 27 is effectively suppressed with a simple structure, similar to the foregoing embodiment, etc.

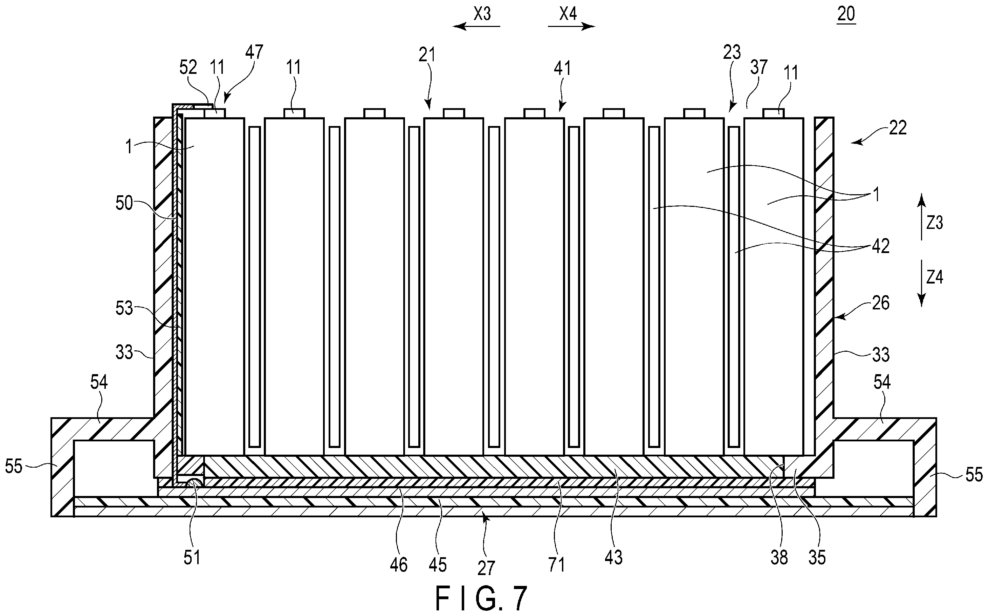

Also in a third modification shown in FIG. 7, the conductive layer 46 is electrically connected to one electrode terminal 11 of a certain battery 1 via the relay conductive portion 50, and is electrically connected to the electrical path 47, similar to the modification shown in FIG. 5. However, in the present modification, the surface of the conductive layer 46 on the side where the battery group 21 is located is coated with an insulating coating (first insulating coating) 71. The insulating coating 71 is made of a material having electrical insulating properties. The insulating coating 71 is formed by applying a solder resist or a moisture-proof coating agent to the surface of the conductive layer 46 on the side where the battery group 21 is located. In the conductive layer 46, the insulating coating 71 is not formed at the connection portion with the relay conductive portion 50; on the other hand, on the surface of the conductive layer 46 on the side where the battery group 21 is located, the insulating coating 71 is formed on most of the surface except for the connection portion with the relay conductive portion 50.

In the present modification, since the insulating coating 71 is provided, even when a crack or the like occurs in any of the insulating sheets 43, the plurality of batteries 1 are effectively prevented from being electrically connected through the conductive layer 46. Therefore, the plurality of batteries 1 are more effectively prevented from being short-circuited via a portion other than the electric path 47.

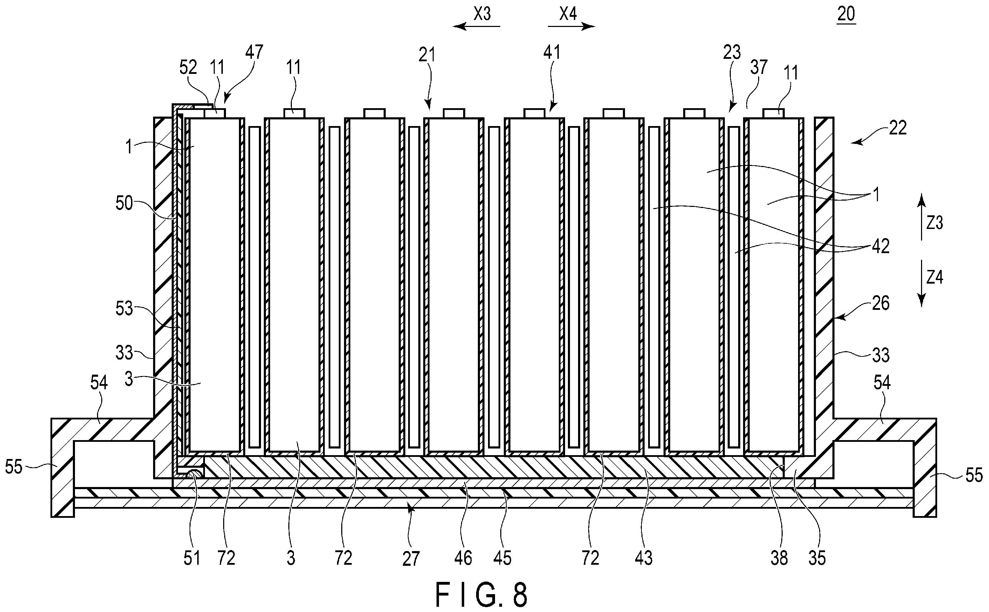

In a fourth modification shown in FIG. 8, the outer surface of the outer container 3 of each of the plurality of batteries 1 is coated with an insulating coating (second insulating coating) 72. The insulating coating 72 is made of a material having electrical insulating properties. The insulating coating 72 is formed by attaching an insulating material to the outer surface of the outer container 3. In this modification, in each outer container 3 of the battery 1, at least the entire outer surface of the bottom wall 7 is covered with the insulating coating 72. In the present modification, since the insulating coating 72 is provided, even when a crack or the like occurs in any of the insulating sheets 43, the plurality of batteries 1 are effectively prevented from being electrically connected through the conductive layer 46. Therefore, similarly to the modification of FIG. 7, the plurality of batteries 1 are more effectively prevented from being short-circuited via a portion other than the electric path 47.

In the structure in which the conductive layer 46 is electrically connected to the outer container 3 of a certain battery 1 similar to the modification of FIG. 6 and the insulating coating 72 is formed similar to the modification example of FIG. 8, the insulating coating 72 is not formed in the connection portion with the relay conductive portion 60 in the outer container 3 of a certain battery 1. Further, in a certain modification, both the insulating films 71 and 72 may be formed.

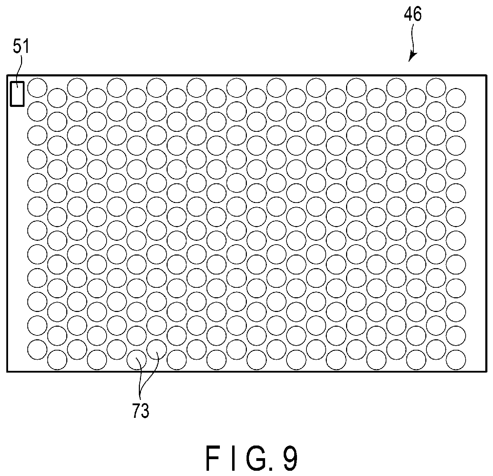

In the fifth modification shown in FIG. 9, a large number of holes 73 are formed in the conductive layer 46. FIG. 9 illustrates a state in which the conductive layer 46 is viewed from one side in the stacking direction of the insulating layer 45 and the conductive layer 46. As shown in FIG. 9, etc., each of the holes 73 penetrates the conductive layer 46 in the stacking direction of the insulating layer 45 and the conductive layer 46. Due to forming the large number of holes 73, the conductive layer 46 has a mesh shape when viewed from the stacking direction of the insulating layer 45 and the conductive layer 46. Since the conductive layer 46 has a mesh shape, the contact area between the conductive layer 46 and the insulating layer 45 is reduced, and thus the capacitance of the conductive layer 46 with respect to the metal body 27 is reduced. Accordingly, in a case of using the battery group 21 (the electrical path 47) electrically connected to an inverter or the like, even when an AC voltage is applied between the conductive layer 46 and the metal body 27, a leakage current is suppressed from flowing between the conductive layer 46 and the metal body 27.

In the example of FIG. 9, each of the large number of holes 73 has a circular shape when viewed from the stacking direction. In each of the holes 73, the circle forming the circular shape is an inscribed circle of a regular hexagon. In addition, in each of the regular hexagons forming the circular shape of the corresponding hole 73 as an inscribed circle, the lattice points of the hexagonal lattice are located at six corners and the center. Since the holes 73 are formed as described above, many holes 73 can be formed in the conductive layer 46, and the contact area of the conductive layer 46 with the insulating layer 45 can be reduced. In addition, since each of the holes 73 has a circular shape without a corner portion when viewed from the stacking direction, electric field concentration on a portion where the hole 73 is formed is reduced.

In addition, from the viewpoint of appropriately suppressing corona discharge in the air layer between the battery group 21 and the metal body 27, the diameter of the circular shape of each of the holes 73 is preferably as small as possible. When the metal body 27, the insulating layer 45, and the conductive layer 46 are made from the metal base substrate, the conductive layer 46 can be formed in a mesh shape in the same manner as when the circuit portion of the printed wiring board is formed from the metal base substrate.

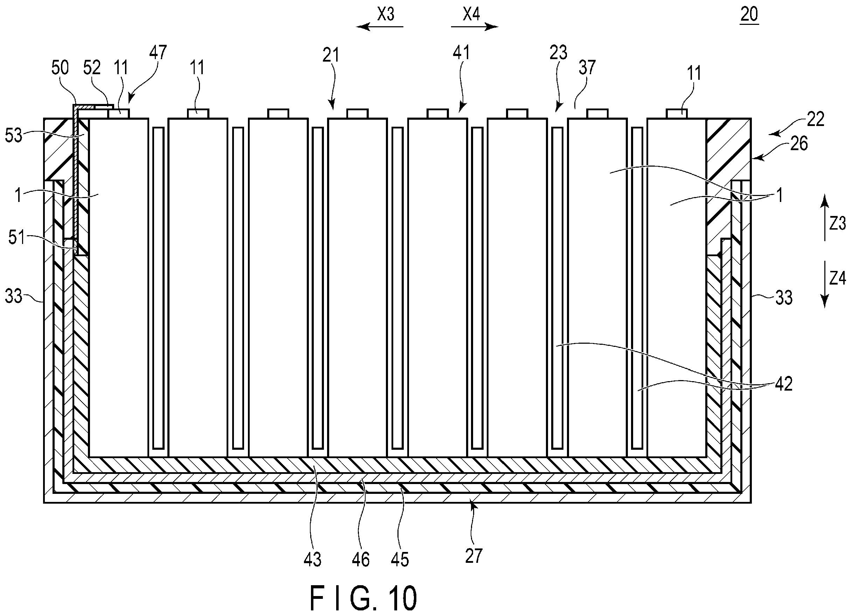

In a sixth modification shown in FIG. 10, in the case **22,** the metal body 27 forms a part of the case bottom wall and also forms a part of each of the pair of case side walls **33.** Therefore, in the present modification, the metal body 27 has a U-shape or a substantially U-shape in a cross section orthogonal or substantially orthogonal to the lateral direction. Also in the present modification, the portion of the case 22 other than the metal body 27 has electrical insulation properties, and the metal body 27 has a higher thermal conductivity than the portion of the case 22 other than the metal body **27.** Also in the present modification, the insulating layer 45 is laminated on the surface of the metal body 27 on the side where the battery group 21 is located. Furthermore, the conductive layer 46 is laminated on the surface of the insulating layer 45 on the side where the battery group 21 is located. In the present modification, each of the insulating layer 45 and the conductive layer 46 also has a U shape or a substantially U shape in a cross section orthogonal or substantially orthogonal to the lateral direction.

In the present modification, the conductive layer 46 is electrically connected to one of the pair of electrode terminals 11 of a certain battery **1,** and is electrically connected to an electrical path 47 through which a current flows in each of charging and discharging of the battery group **21.** Therefore, the conductive layer 46 has the same electric potential as that of any location of the electric path **47,** and has an electric potential different from that of the metal body **27.** Therefore, also in the present modification, corona discharge in the air layer between the battery group 21 and the metal body 27 is effectively suppressed with a simple structure, similar to the foregoing embodiment, **etc.**

In the present modification, the insulating layer 45 extends beyond the layer edge of the conductive layer 46 to an area outside the layer edge of the conductive layer 46 in a direction intersecting the stacking direction of the insulating layer 45 and the conductive layer 46. For this reason, also in the present modification, the insulation distance (creepage distance) between the conductive layer 46 and the metal body 27 is increased as in the foregoing embodiment, etc. Therefore, also in the present modification, electrical insulation between the conductive layer 46 and the metal body 27 is appropriately ensured.

In one modification, the metal body 27 has a U shape or a substantially U shape in a cross section orthogonal or substantially orthogonal to the depth direction. In this case, each of the insulating layer 45 and the conductive layer 46 also has a U shape or a substantially U shape in a cross section orthogonal or substantially orthogonal to the depth direction. Also in the present modification, the insulating layer 45 is laminated on the surface of the metal body 27 on the side where the battery group 21 is located. Furthermore, the conductive layer 46 is laminated on the surface of the insulating layer 45 on the side where the battery group 21 is located. Then insulating layer 45 extends beyond the layer edge of the conductive layer 46 to an area outside the layer edge of the conductive layer 46 in a direction intersecting the stacking direction of the insulating layer 45 and the conductive layer 46. For this reason, the operations and advantageous effects similar to those of the foregoing embodiment, etc. are achieved in the present modification.

In addition, the number of batteries 1 forming the battery group 21, the arrangement of the plurality of batteries 1 in the battery group 21, and the like are not limited to the above-described embodiment and the like. The battery group 21 may include a plurality of batteries. In addition, the types, etc. of the plurality of batteries 1 constituting the battery group 21 are not particularly limited.

According to at least one of these embodiments or examples, the insulating layer is laminated on the surface of the metal body on the side where the battery group is located. The conductive layer is laminated on a surface of the insulating layer on a side where the battery group is located, and is electrically connected to any of the electric path and a portion having conductivity in the battery group. Thus, it is possible to provide a battery module in which corona discharge in an air layer between the battery group and the metal body is effectively suppressed with a simple structure.

Although some embodiments of the invention have been described, these embodiments are for purposes of illustration and are not intended to limit the scope of the invention.

## Claims

1. A battery module (20) comprising:
a battery group (21) including a plurality of batteries (1);
an electric path (47) through which a current passes during each of charging and discharging the plurality of batteries (1);
a case (22) in which the battery group (21) is accommodated and including a metal body (27) having electric conductive properties;
an insulating layer (45) stacked on a surface of the metal body (27) on a side where the battery group (21) is located, the insulating layer (45) having electric insulating properties, wherein the insulating layer (45) is made of a resin;
a conductive layer (46) stacked on a surface of the insulating layer (45) on a side where the battery group (21) is located, the conductive layer (46) being electrically connected to any of the electric path (47) and a portion having electric conductive properties in the battery group (21), wherein the conductive layer (46) is made of a metal; and
an insulating sheet (43) arranged between the conductive layer (46) and the battery group (21) and having electric insulating properties,
wherein the insulating body (43) is made of a resin or silicone.

2. The battery module (20) of claim 1, wherein
the insulating layer (45) extends beyond a layer edge of the conductive layer (46) to an area outside the layer edge of the conductive layer (46) in a direction intersecting a stacking direction of the insulating layer (45) and the conductive layer (46).

3. The battery module (20) of claim 1 or 2 further comprising:
a busbar (25) that electrically connects between the plurality of batteries (1) and forms a part of the electric path (47); and
a relay conductive portion (50) connecting the conductive layer (46) to the busbar (25).

4. The battery module (20) of claim 1 or 2, wherein
each of the plurality of batteries (1) includes an electrode group (2) and a metal-made outer container (3) in which the electrode group (2) is accommodated, and
the battery module (20) further comprises a relay conductive portion (60) that connects between the outer container (3) of one of the plurality of batteries (1) and the conductive layer (46).

5. The battery module (20) of any one of claims 1 to 4, wherein the insulating sheet (43) has a higher heat conductivity than a part of the case (22) other than the metal body (27) and air.

6. The battery module (20) of any one of claims 1 to 5, wherein
each of the plurality of batteries (1) includes an electrode group (2) and a metal-made outer container (3) in which the electrode group (2) is accommodated,
a hole (63) is formed in the insulating sheet (43), the hole (63) penetrating the insulating sheet (43) in a stacking direction of the insulating layer (45) and the conductive layer (46), and
the battery module (20) further comprises a relay conductive portion (60) that is arranged in the hole (63) of the insulating sheet (43) and connects between the outer container (3) of one of the plurality of batteries (1) and the conductive layer (46).

7. The battery module (20) of any one of claims 1 to 6, further comprising a first electric insulating film (71) coating a surface of the conductive layer (46) on a side where the battery group (21) is located.

8. The battery module (20) of any one of claims 1 to 7, wherein
each of the plurality of batteries (1) includes an electrode group (2) and a metal-made outer container (3) in which the electrode group (2) is accommodated, and
the battery module (20) further comprises a second electric insulating film (72) that coats an outer surface of the outer container (3) in each of the plurality of batteries (1).

9. The battery module (20) of any one of claims 1 to 7, wherein the conductive layer (46) has a mesh shape when viewed from a stacking direction of the insulating layer (45) and the conductive layer (46).

10. The battery module (20) of any one of claims 1 to **9,** wherein the conductive layer (46) is in an electric potential that is the same as an electric potential of any one location in the electric path (47) and differs from an electric potential of the metal body (27).

## Patentansprüche

1. Batteriemodul (20), umfassend:
eine Batteriegruppe (21), die eine Vielzahl von Batterien (1) umfasst;
einen Strompfad (47), den ein Strom während jedes vom Laden und Entladen der Vielzahl von Batterien (1) durchquert;
ein Gehäuse (22), in dem die Batteriegruppe (21) aufgenommen ist und das einen Metallkörper (27) umfasst, der elektrisch leitfähige Eigenschaften aufweist;
eine isolierende Schicht (45), die auf einer Oberfläche des Metallkörpers (27) auf einer Seite gestapelt ist, wo die Batteriegruppe (21) sich befindet, wobei die isolierende Schicht (45) elektrisch isolierende Eigenschaften aufweist, wobei die isolierende Schicht (45) aus einem Harz besteht;
eine leitfähige Schicht (46), die auf einer Oberfläche der isolierenden Schicht (45) auf einer Seite gestapelt ist, wo die Batteriegruppe (21) sich befindet, wobei die leitfähige Schicht (46) elektrisch mit einem beliebigen von dem Strompfad (47) und einem Abschnitt, der elektrisch leitfähige Eigenschaften aufweist, in der Batteriegruppe (21) verbunden ist, wobei die leitfähige Schicht (46) aus einem Metall besteht; und
eine isolierende Lage (43), die zwischen der leitfähigen Schicht (46) und der Batteriegruppe (21) angeordnet ist und elektrisch isolierende Eigenschaften aufweist,
wobei der isolierende Körper (43) aus einem Harz oder Silikon besteht.

2. Batteriemodul (20) nach Anspruch 1, wobei
die isolierende Schicht (45) sich über einen Schichtrand der leitfähigen Schicht (46) hinaus zu einem Bereich außerhalb des Schichtrandes der leitfähigen Schicht (46) in einer Richtung erstreckt, die eine Stapelungsrichtung der isolierenden Schicht (45) und der leitfähigen Schicht (46) schneidet.

3. Batteriemodul (20) nach Anspruch 1 oder 2, ferner umfassend:
eine Sammelschiene (25), welche die Vielzahl von Batterien (1) elektrisch verbindet und einen Teil des Strompfads (47) bildet; und
einen leitfähigen Relaisabschnitt (50), der die leitfähige Schicht (46) mit der Sammelschiene (25) verbindet.

4. Batteriemodul (20) nach Anspruch 1 oder 2, wobei
jede der Vielzahl von Batterien (1) eine Elektrodengruppe (2) und einen aus Metall bestehenden äußeren Behälter (3) umfasst, in dem die Elektrodengruppe (2) aufgenommen ist, und
das Batteriemodul (20) ferner einen leitfähigen Relaisabschnitt (60) umfasst, der den äußeren Behälter (3) von einer der Vielzahl von Batterien (1) und die leitfähige Schicht (46) verbindet.

5. Batteriemodul (20) nach einem der Ansprüche 1 bis 4, wobei die isolierende Lage (43) eine höhere Wärmeleitfähigkeit aufweist als ein Teil des Gehäuses (22), der sich von dem Metallkörper (27) unterscheidet, und Luft.

6. Batteriemodul (20) nach einem der Ansprüche 1 bis 5, wobei
jede der Vielzahl von Batterien (1) eine Elektrodengruppe (2) und einen aus Metall bestehenden äußeren Behälter (3) umfasst, in dem die Elektrodengruppe (2) aufgenommen ist,
ein Loch (63) in der isolierenden Lage (43) gebildet ist, wobei das Loch (63) in die isolierende Lage (43) in einer Stapelungsrichtung der isolierenden Schicht (45) und der leitfähigen Schicht (46) eindringt, und
das Batteriemodul (20) ferner einen leitfähigen Relaisabschnitt (60) umfasst, der in dem Loch (63) der isolierenden Lage (43) angeordnet ist und den äußeren Behälter (3) einer der Vielzahl von Batterien (1) und die leitfähige Schicht (46) verbindet.

7. Batteriemodul (20) nach einem der Ansprüche 1 bis 6, ferner umfassend einen ersten elektrisch isolierenden Film (71), mit dem eine Oberfläche der leitfähigen Schicht (46) auf einer Seite beschichtet ist, wo die Batteriegruppe (21) sich befindet.

8. Batteriemodul (20) nach einem der Ansprüche 1 bis 7, wobei
jede der Vielzahl von Batterien (1) eine Elektrodengruppe (2) und einen aus Metall bestehenden äußeren Behälter (3) umfasst, in dem die Elektrodengruppe (2) aufgenommen ist, und
das Batteriemodul (20) ferner einen zweiten elektrisch isolierenden Film (72) umfasst, mit dem eine äußere Oberfläche des äußeren Behälters (3) in jeder der Vielzahl von Batterien (1) beschichtet ist.

9. Batteriemodul (20) nach einem der Ansprüche 1 bis 7, wobei die leitfähige Schicht (46), aus einer Stapelungsrichtung der isolierenden Schicht (45) und der leitfähigen Schicht (46) betrachtet, eine Netzform aufweist.

10. Batteriemodul (20) nach einem der Ansprüche 1 bis 9, wobei die leitfähige Schicht (46) auf einem elektrischen Potential liegt, welches das gleiche wie ein elektrisches Potential einer beliebigen Stelle in dem Strompfad (47) ist und sich von einem elektrischen Potential des Metallkörpers (27) unterscheidet.

## Revendications

1. Module de batteries (20) comprenant :
un groupe de batteries (21) incluant une pluralité de batteries (1) ;
un chemin électrique (47) dans lequel circule un courant pendant chacune d'une charge et d'une décharge de la pluralité de batteries (1) ;
un boîtier (22) dans lequel est logé le groupe de batteries (21) et incluant un corps métallique (27) présentant des propriétés de conduction électrique ;
une couche isolante (45) empilée sur une surface du corps métallique (27) sur un côté où se trouve le groupe de batteries (21), la couche isolante (45) présentant des propriétés d'isolation électrique, dans lequel la couche isolante (45) est constituée d'une résine ;
une couche conductrice (46) empilée sur une surface de la couche isolante (45) sur un côté où se trouve le groupe de batteries (21), la couche conductrice (46) étant reliée électriquement à l'un quelconque parmi le chemin électrique (47) et une partie présentant des propriétés de conduction électrique dans le groupe de batteries (21), dans lequel la couche conductrice (46) est constituée d'un métal ; et
une feuille isolante (43) agencée entre la couche conductrice (46) et le groupe de batteries (21) et présentant des propriétés d'isolation électrique,
dans lequel le corps isolant (43) est constitué d'une résine ou de silicone.

2. Module de batteries (20) selon la revendication 1, dans lequel
la couche isolante (45) s'étend au-delà d'un bord de couche de la couche conductrice (46) jusqu'à une zone à l'extérieur du bord de couche de la couche conductrice (46) dans une direction croisant une direction d'empilement de la couche isolante (45) et de la couche conductrice (46).

3. Module de batteries (20) selon la revendication 1 ou 2, comprenant en outre :
une barre omnibus (25) qui assure une liaison électrique entre la pluralité de batteries (1) et fait partie du chemin électrique (47) ; et
une partie conductrice de relais (50) reliant la couche conductrice (46) à la barre omnibus (25).

4. Module de batteries (20) selon la revendication 1 ou 2, dans lequel
chacune de la pluralité de batteries (1) inclut un groupe d'électrodes (2) et un contenant extérieur métallique (3) dans lequel est logé le groupe d'électrodes (2), et
le module de batteries (20) comprend en outre une partie conductrice de relais (60) qui assure une liaison entre le contenant extérieur (3) de l'une de la pluralité de batteries (1) et la couche conductrice (46).

5. Module de batteries (20) selon l'une quelconque des revendications 1 à 4, dans lequel la feuille isolante (43) présente une conductivité thermique supérieure à celle d'une partie du boîtier (22) autre que le corps métallique (27) et l'air.

6. Module de batteries (20) selon l'une quelconque des revendications 1 à 5, dans lequel
chacune de la pluralité de batteries (1) inclut un groupe d'électrodes (2) et un contenant extérieur métallique (3) dans lequel est logé le groupe d'électrodes (2),
un trou (63) est formé dans la feuille isolante (43), le trou (63) pénétrant dans la feuille isolante (43) dans une direction d'empilement de la couche isolante (45) et de la couche conductrice (46), et
le module de batteries (20) comprend en outre une partie conductrice de relais (60) qui est agencée dans le trou (63) de la feuille isolante (43) et assure une liaison entre le contenant extérieur (3) de l'une de la pluralité de batteries (11) et la couche conductrice (46).

7. Module de batteries (20) selon l'une quelconque des revendications 1 à 6, comprenant en outre un premier film d'isolation électrique (71) recouvrant une surface de la couche conductrice (46) sur un côté où se trouve le groupe de batteries (21).

8. Module de batteries (20) selon l'une quelconque des revendications 1 à 7, dans lequel
chacune de la pluralité de batteries (1) inclut un groupe d'électrodes (2) et un contenant extérieur métallique (3) dans lequel est logé le groupe d'électrodes (2), et
le module de batteries (20) comprend en outre un deuxième film d'isolation électrique (72) qui recouvre une surface extérieure du contenant extérieur (3) dans chacune de la pluralité de batteries (1).

9. Module de batteries (20) selon l'une quelconque des revendications 1 à 7, dans lequel la couche conductrice (46) présente une forme maillée en vue dans une direction d'empilement de la couche isolante (45) et de la couche conductrice (46).

10. Module de batteries (20) selon l'une quelconque des revendications 1 à 9, dans lequel la couche conductrice (46) présente un potentiel électrique identique à un potentiel électrique d'un emplacement quelconque dans le chemin électrique (47) et différent d'un potentiel électrique du corps métallique (27).
